# EUROPEAN PATENT APPLICATION

(11) **EP 2 759 745 A1**
(43) Date of publication of application: **30.07.2014**
(21) Application number: 14152756.4
(22) Date of filing: 28.01.2014
(51) Int. Cl.: F16H 57/12, F16H 57/00

(54) **Movement transmission member with springs for taking up the play in an HVAC unit**

(30) Priority: 29.01.2013 IT TO20130068
(71) Applicant: DENSO THERMAL SYSTEMS S.p.A., 10046 Poirino (Torino) (IT)
(72) Inventor: Gataleta, Raffaele, I-10046 POIRINO (Italy) (IT); Sola, Davide, I-10046 POIRINO (Italy) (IT)
(74) Representative: Vanzini, Christian

(57) **Abstract**

Movement transmission device comprising
a flat reference surface (5a) made of plastic, and
a movable member (7) made of plastic and kept within a fixed distance from the reference surface (5a) by means of at least one retaining surface (8b).

The movable member is slidable parallel to the reference surface and/or rotatable about an axis (z2) perpendicular thereto. At least one elastically deformable projection (7f) is integrally formed on the movable member. The projection of the movable member is adapted to engage the reference surface (5a) so as to produce a reaction force acting on the movable member. The reaction force has a component perpendicular to the reference surface and directed against the retaining surface.

## Description

The present invention relates to a movement transmission device comprising
a flat reference surface made of plastic, and
a movable member made of plastic and kept within a fixed distance from the reference surface by means of a retaining surface,
wherein at least one elastically deformable projection is integrally formed on said movable member, said projection being adapted to engage said reference surface so as to produce a reaction force acting on the movable member, said reaction force having a component perpendicular to the reference surface and directed against the retaining surface.

Movement transmission devices are commonly used in various industrial sectors and in particular in heating, ventilation and air conditioning (HVAC) applications in the motor vehicle sector. In this latter specific application the aforementioned devices form part of a kinematic chain which transmits the movement from a control panel, or from a servomotor, to an air distribution flap.

In general the known devices do not ensure precise assembly of the components on their supports owing to the axial play present, which is due to the production process and the design tolerances. Typically, the movable components are mounted on their supports by means of snap-engaging systems or by means of screws. The former have drawbacks as regards the possibility of taking up the play due to dispersion of the tolerances associated with the injection-moulding process; correction of the play between the parts may in fact result in the creation of interference which increases the assembly forces or even prevent assembly itself. The latter instead result in an increase in the production cycle time due to the screwing operation, an increase in weight, as well as the need to manage additional components (screws) which could create problems.

The lack of a precise coupling fit between the movable member and support in general has the consequence that during travel of the vehicle a bothersome rattling noise is caused by the axial play.

One object of the present invention is therefore to provide a movement transmission device designed to allow taking-up of the play which is inevitably present.

This object is achieved according to the invention by a device of the type defined initially, in which said movable member is a lever rotatable about an axis perpendicular to the reference surface and comprising at least one arm extending radially from said axis, said at least one elastically deformable projection being integrally formed on said at least one arm.

In a device designed in accordance with this proposed solution, owing to the elasticity of the deformable projection, the movable component is stressed in the axial direction against the retaining surface, thus eliminating the play between the components and consequently the noise associated with said play.

Preferred embodiments of the invention are defined in the dependent claims which are to be understood as forming an integral part of the present description.

Further characteristic features and advantages of the device according to the invention will become clear from the following detailed description of an embodiment of the invention provided with reference to the accompanying drawings and provided purely by way of a non-limiting example in which:
- Figure 1 is an elevation view of an air conditioning unit for a motor vehicle;
- Figures 2 and 3 are perspective views, from opposite sides, of a movable member of a kinematic distribution assembly of the air conditioning unit according to Figure 1;
- Figure 4 is a cross-sectional view of a detail of the air conditioning unit according to Figure 1 through the movable member of Figures 2 and 3.

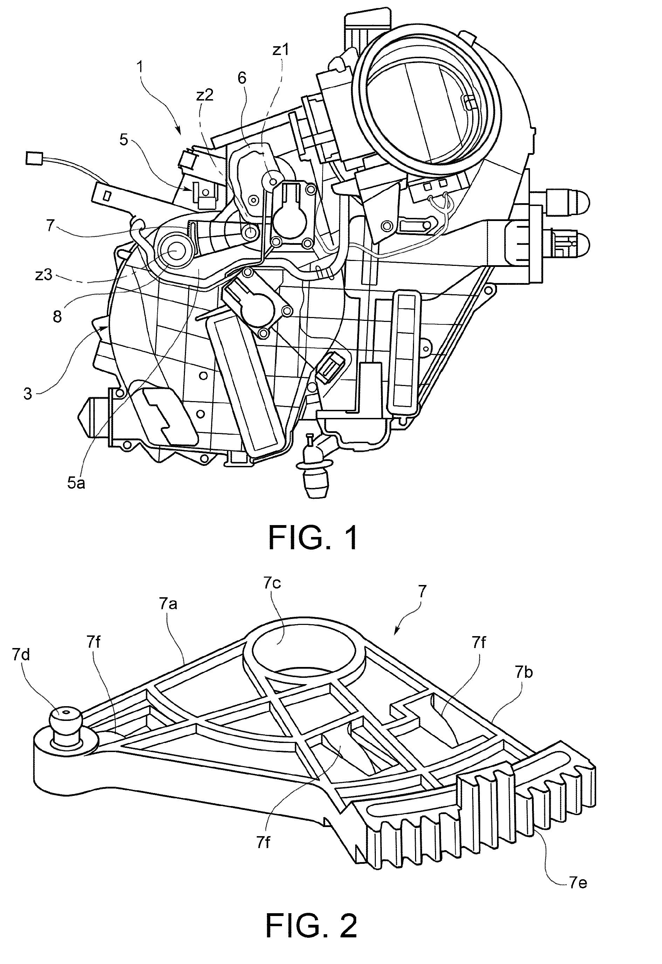

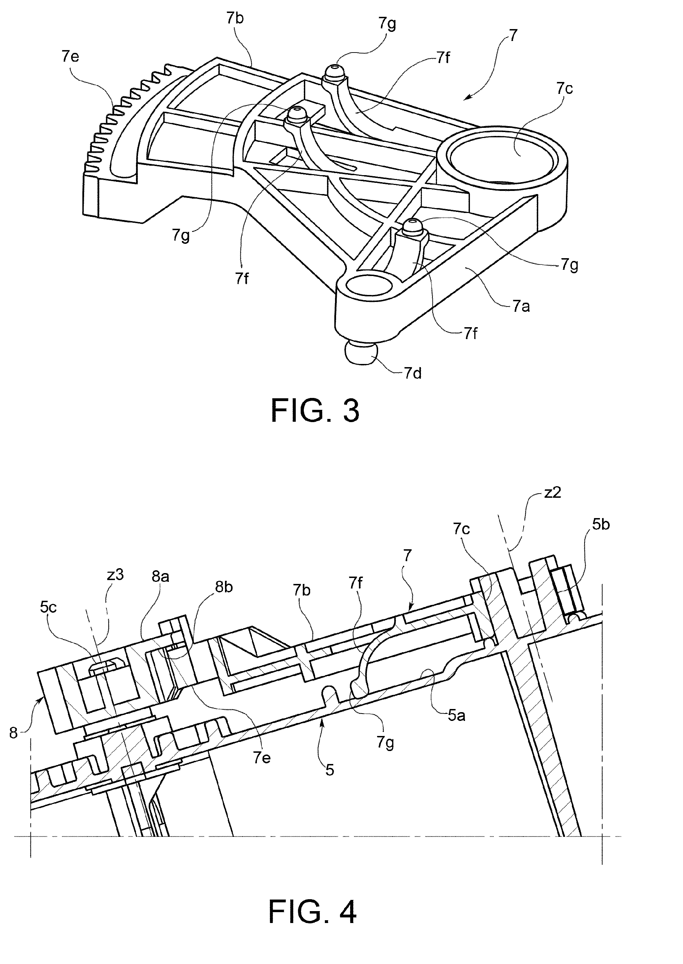

Figure 1 shows a heating, ventilation and air conditioning (HVAC) unit for a motor vehicle, denoted overall by 1. The HVAC unit 1 comprises a housing 3 made of plastic. A kinematic assembly which transmits the movement from a control panel (not shown) to air distribution flaps (not shown) is mounted on a wall portion 5 of the housing 3. In the example shown this kinematic assembly comprises a distribution cam member 6, a distribution lever 7 (shown also in Figures 2 and 3) and a main gearwheel 8, these being mounted on the wall portion 5 of the housing 3 and being rotatable relative to respective axes of rotation z1, z2 and z3 which are perpendicular to a flat reference surface 5a (consisting of a specific outer surface of the wall portion 5 of the housing 3).

In the example shown, the distribution cam member 6, the distribution lever 7 and the main gearwheel 8 are mounted on respective pin portions formed integrally on the wall portion 5 of the housing 3. Figure 4 shows the pin portions - denoted by 5b and 5c - on which the distribution lever 7 and the main gearwheel 8 are mounted. The distribution cam member 6 and the main gearwheel 8 are snap-engaged on the respective pins.

Figures 2 and 3 show the distribution lever 7 separately in views from opposite sides of the lever. This lever has an approximately L-shaped form with two arms 7a and 7b which are arranged at an angle relative to each other and at the joining point of which a through-hole 7c is formed, the pin portion 5b being inserted in said through-hole in the assembled condition shown in Figure 4. One of the arms of the lever, 7a, has, formed thereon, a follower pin portion 7d adapted to engage a corresponding cam surface of the distribution cam member 6, while the other of the lever arms, 7b, has, formed thereon, a peripheral toothed portion 7e adapted to engage the main gearwheel 8.

The distribution lever 7 is kept axially in position, namely is kept within a fixed distance from the reference surface 5a since it is axially arranged between the wall portion 5 on the one hand and the distribution cam 6 and the main gearwheel 8 on the other hand. The distribution cam 6 and main gearwheel 8 have in fact respective retaining surfaces which limit the possible displacement of the distribution lever in the axial direction. In this connection, in Figure 4 it can be seen that the main gearwheel 8 has a flanged portion 8a projecting radially from the wheel, with a retaining surface 8b axially superimposed on the peripheral toothed portion 7e of the lever 7. A similar arrangement is present on the distribution cam member 6.

Conventionally, the arrangement described above would be affected by a certain axial play between the distribution lever 7 and the wall portion 5 of the housing.

According to the invention this play is compensated for by means of at least one elastically deformable projection 7f (in the example, three projections) integrally formed on the distribution lever 7. The projection(s) 7 are adapted to engage the reference surface 5a so as to produce a reaction force acting on the distribution lever 7. The reaction force has a component perpendicular to the reference surface 5a and directed away from this reference surface and therefore against the retaining surfaces 8b formed on the main gearwheel 8 and the cam member 6. In this way the possibility of play arising is eliminated.

Preferably, the projection 7f is deformable by means of bending and is in the form of a cantilever arm having a free end 7g adapted to engage the reference surface 5a. In a particularly preferred manner the projection 7f is curved. The free end 7g of the projection has a tip with a rounded shape, for example an approximately spherical shape, and with a certain height, so as to allow the device to take up the play in all directions, thus reducing as far as possible the friction between the parts.

The spring action exerted by the projections 7f also acts during rotation of the lever 7, without any negative impact on the rotational force. From a practical point of view these projections 7f may be obtained by simply modifying the moulds intended to produce the levers, without negative effects on the variable costs and the weight of the component.

Although the invention has been described with reference to a specific kinematic assembly, it will be understood that it may be applied to any movable member or lever which is mounted so as to be kept within a fixed distance from a reference surface by means of at least one retaining surface and so as to be able to rotate about an axis perpendicular thereto.

## Claims

1. Movement transmission device comprising
a flat reference surface (5a) made of plastic material, and
a movable member (7) made of plastic material and kept within a fixed distance from the reference surface (5a) by means of at least one retaining surface (8b),
wherein at least one elastically deformable projection (7f) is integrally formed on said movable member, said projection being adapted to engage said reference surface in such a way as to produce a reaction force acting on the movable member, said reaction force having a component perpendicular to the reference surface and directed against the retaining surface,
**characterized in that**
said movable member is a lever rotatable about an axis (z2) perpendicular to the reference surface and comprising at least one arm (7a, 7b) extending radially from said axis, said at least one elastically deformable projection (7f) being integrally formed on said at least one arm.

2. Device according to Claim 1, wherein said projection is deformable by means of bending.

3. Device according to Claim 2, wherein said projection is in the form of a cantilever arm having a free end (7g) adapted to engage said reference surface.

4. Device according to Claim 3, wherein said projection is curved.

5. Device according to any one of the preceding claims, wherein said reference surface has a pin portion (5b) integrally formed thereon, said movable member having a through-hole (7c) inside which said pin portion is inserted.

6. Device according to any one of the preceding claims, wherein said movable member is a component of a kinematic distribution assembly (6, 7, 8) for an HVAC unit.
